# EUROPEAN PATENT SPECIFICATION

(11) **EP 3 121 996 B1**
(45) Date of publication and mention of the grant of the patent: **27.02.2019**
(21) Application number: 14890086.3
(22) Date of filing: 22.09.2014
(51) Int. Cl.: H04L 12/24

(54) **SYNCHRONIZATION FAILURE PROCESSING METHOD AND SYSTEM FOR CLOCK AND TIME SYNCHRONIZATION NETWORK**
SYNCHRONISATIONSSTÖRUNGSVERARBEITUNGSVERFAHREN UND SYSTEM FÜR EIN TAKT- UND ZEITSYNCHRONISIERUNGSNETZWERK
PROCÉDÉ ET SYSTÈME DE TRAITEMENT D'ÉCHEC DE SYNCHRONISATION POUR RÉSEAU DE SYNCHRONISATION D'HORLOGE ET DE TEMPS

(30) Priority: 23.04.2014 CN 201410166755
(43) Date of publication of application: 25.01.2017
(73) Proprietor: ZTE Corporation, Shenzhen, Guangdong 518057 (CN)
(72) Inventor: WANG, Bin, Shenzhen Guangdong 518057 (CN); ZHANG, Junhui, Guangdong 518057 (CN)
(74) Representative: HGF Limited
(86) International application number: PCT/CN2014/087103
(87) International publication number: WO 2015/161621

(56) References cited:
- CN-A- 1 863 156
- CN-A- 102 685 781
- GB-A- 2 341 749
- US-A1- 2013 336 117
- US-B1- 6 765 863

## Description

### Technical Field

The present invention relates to a clock and time synchronization network, and thereby relates to a method and system for processing a synchronization failure for a clock and time synchronization network.

### Background of the Related Art

Clock synchronization networks, represented by synchronization Ethernets, implement synchronization of working frequencies and pulse phases of multiple network devices by transmitting pulse signals through link and physical layers; and time synchronization networks, represented by the network measurement and control system's Precision Time Protocol (PTP), implement synchronization of temporal phases of multiple network devices.

By taking the clock synchronization network as an example, in a case that when the network is in clock synchronization, a clock synchronization network element delivers a clock state and a clock quality level to the downstream through a notification message step by step. The downstream network element analyzes notification messages received by it from different links, and decides a link of which a lock is synchronized in combination with a state of itself. After the synchronization, the downstream network element continues to deliver a clock synchronization state and a clock quality level of the present network element to a downstream network element through a notification message.

If a synchronization failure occurs in the clock synchronization network, a clock recovery process of the current network element is as follows:
After the network element finds that clock synchronization fails, the network element firstly enters a holding state and transmits a failure notification and a clock quality level when it is in the holding state to a next stage of network element. After receiving the information, the next stage of network element compares its own clock quality level with the clock quality level of the previous stage of network element. If the clock quality levels of the two network elements are the same, it is locked with the clock of the previous stage of network element, and if it finds that it cannot be locked with the previous stage of network element, the next stage of network element enters a holding state and continues to transmit the failure notification and its own clock quality level to a next stage of network element. If after the comparison, it shows that the clock quality level of the previous stage of network element is smaller than its own clock quality level, the network element directly enters a holding state and continues to transmit the failure notification and its own clock quality level to a next stage of network element, until a certain stage of network element finds a standby clock source and is locked with the standby clock source. If after the comparison, it shows that the clock quality level of the previous stage of network element is higher than its own clock quality level, the network element is directly locked with a clock of the previous stage of network element, at this point, the previous stage of network element is equivalent to a standby clock source. Then, in a reverse link, the network element which is locked with the standby clock notifies the previous stage of network element to lock with it, until the network element on the reverse link which firstly enters a holding state also enters a clock locked state.

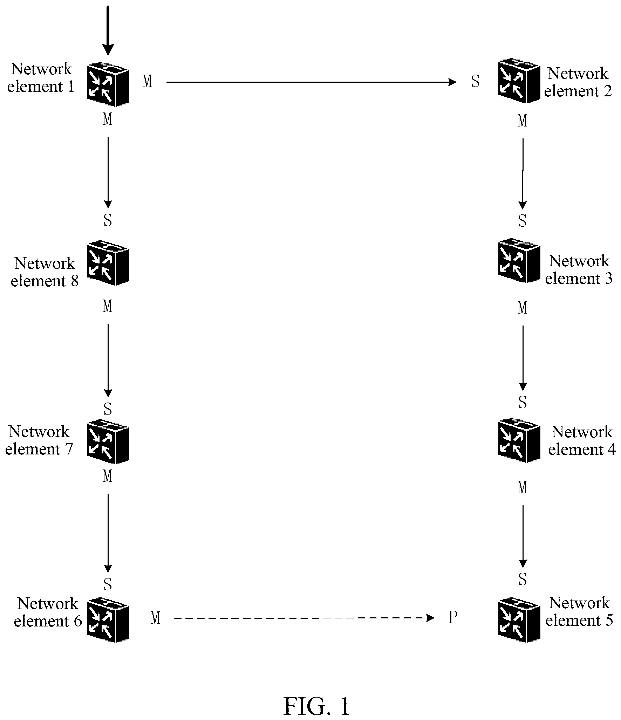

The above process will be described using the clock synchronization network shown in Fig. 1 as follows.

It is assumed that in the network, a fiber break failure occurs between network element 1 and network element 2, and then the network element 2 enters a clock holding state and transmits a failure notification and a clock quality level to network element 3. The network element 3 does not have other standby clock sources, and after receiving the notification transmitted by the network element 2, the network element 3 compares its own clock quality level with the clock quality level of the network element 2, and both of the clock quality levels are the same, then the network element 3 continues to be locked with the network element 2 and transmits the failure notification and the clock quality level to network element 4. The network element 4 does not have other standby clock sources, and after receiving the notification transmitted by the network element 3, the network element 4 continues to compare its own clock quality level with the clock quality level of the network element 3, and both of the clock quality levels are the same, then the network element 4 continues to be locked with the network element 3 and transmits the failure notification and the clock quality level to network element 5. The network element 5 has a standby network clock source, which is a clock of network element 6. Therefore, after receiving the notification of the network element 4, the network element 5 is immediately locked with the clock of the network element 6, and then notifies the network element 4 to lock with its own clock. After the network element 4 is locked with the clock of the network element 5, the network element 4 notifies the network element 3 to lock with its own clock. After the network element 3 is locked with the clock of the network element 4, the network element 3 notifies the network element 2 to lock with its own clock. Network elements which are traversed in the whole failure recovery flow are network element 2 〉〉 〉〉 network element 3 〉〉 〉〉 network element 4 〉〉 〉〉 network element 5 〉〉 〉〉 network element 4 〉〉 〉〉 network element 3 〉〉 〉〉 network element 2.

It can be seen from the above flow that with the increase of the number of network element nodes in the network, the time required for the network elements to find a standby clock source and the time required for the whole failure recovery also increase.

Further, as each network element detects and makes a response to its own synchronization clock offset change condition, and the network element transmits a message to a next stage of network element after a relatively large time interval, in this case, before the downstream network element enters a holding state according to the received message, an error generated by the upstream network element due to a clock synchronization failure has already been delivered to the next stage of network element, and the clock of the next stage of network element has deviated from a normal reference. As shown in Fig. 1, when the network element 2 detects that its clock is abnormal, a clock error has already taken effect on the network element 2, and the clock of the network element 2 is modified. This clock error may continue to be delivered to the network element 3. When the network element 2 finds the problem and transmits a message to the network element 3, the clock of the network element 3 has been deviated and begins to be delivered to the network element 4. As the number of network elements increases, the time required for the downstream network element to enter a clock holding state is delayed, and an error of the clock held by the downstream network element increases.

In addition, as long as the device is in an unlocked state, the longer the holding time is, the greater the frequency deviation will occur. If the error exceeds a certain range, the clock locking method is unable to compensate for the error.

From the above analysis, the importance of a network element which has a clock synchronization failure and is not connected to a standby clock source rapidly entering a holding state and a network element which is connected to a standby clock source being rapidly locked with the standby clock can be known.

The above problem of the clock synchronization network in clock synchronization also exists in a time synchronization network.

The document GB 2341749 A discloses a method of detecting or anticipating synchronisation faults provided for a digital telecommunications network (1) having a plurality of nodes, each of which obtains a synchronisation signal from a source comprising a selected one of the other nodes, the network is interrogated to obtain data on its topology and, for each node, the identity of the selected respective other node, this information is used to construct a virtual model (12) of the network, and the model is then inspected if any node of the system is to select an alternative synchronisation source, since the data on the topology of the network and the configuration of all the other nodes have already been obtained, this analysis can be relatively rapidly performed, so that any synchronisation feedback loops in the network can be anticipated before they actually occur.

### Summary of the Invention

The present invention provides a method and system for processing a synchronization failure for a clock and time synchronization network according to appended independent claims, to solve the technical problem of when a clock/time synchronization failure occurs in the network, enabling the network element which is not connected to the standby clock/time source to enter the holding state rapidly and enabling the network element which is connected to the standby clock/time source to be locked with the standby clock/time source rapidly. Further improvements and embodiments are provided in the dependent claims.

Also provided is a method for processing a synchronization failure for a clock and time synchronization network, comprising:
setting a controller in a clock/time synchronization network, and acquiring, through the controller, topology connections of the network and clock/time synchronization failure notification messages transmitted by various stages of network elements;
when the controller receives the clock/time synchronization failure notification messages transmitted by the network elements, the controller detecting a link impacted by a failure; and
the controller notifying a network element on the link which is connected to a standby clock/time source to switch to a state of being locked with the standby clock/time source, and notifying a network element on the link which is not connected to the standby clock/time source to switch to a clock/time holding state.

Preferably, the method further comprises:
after learning that the network element which is connected to the standby clock/time source selects the standby clock/time source as a clock/time source of itself, the controller notifying a network element in a holding state that is adjacent to the network element which selects the standby clock/time source to perform clock/time locking with the network element which selects the standby clock/time source; and
after learning that the network element in the holding state selects an adjacent clock/time source thereof as a clock/time source of itself, if it is judged that the network element in the holding state is not a network element which transmits a synchronization failure notification message, the controller continuing to notify a network element in a holding state which is adjacent to the network element to perform clock/time locking with the network element.

Preferably, the method further comprises:
after notifying the network element on the link which is connected to the standby clock/time source to switch to the state of being locked with the standby clock/time source, and notifying the network element on the link which is not connected to the standby clock/time source to switch to the clock/time holding state, the controller notifying a network element in a holding state after a preset time interval, which is adjacent to the network element which is connected to the standby clock/time source, to perform clock/time locking with the network element which is connected to the standby clock/time source; and
after notifying the network element in the clock holding state to perform the clock/time locking with its adjacent network element, if it is judged that the network element in the holding state is not a network element which transmits a failure notification message, the controller continuing to notify a network element in a holding state after the preset time interval, which is adjacent to the network element, to perform the clock/time locking.

Preferably, the method further comprises:
after receiving a notification of switching to be locked with the standby clock/time source which is transmitted by the controller, the network element which is connected to the standby clock/time source acquiring a quality level of the standby clock/time source, and if the quality level of the standby clock/time source is the same as a clock/time quality level of itself, not performing a locking flow, and if the quality level of the standby clock/time source is greater than the clock/time quality level of itself, performing locking with the standby clock/time source; and
after receiving a notification of switching to be locked with a clock/time source of its adjacent network element which is transmitted by the controller, the network element in the holding state acquiring a quality level of the clock/time source of the adjacent network element, and if a quality level of a clock/time source of a network element which selects clock/time is the same as the clock/time quality level of itself, not performing a locking flow; and if the quality level of the clock/time source of the adjacent clock/time network element is greater than the clock/time quality level of itself, implementing clock/time locking with the adjacent clock/time network element.

Also provided is a system for processing a synchronization failure for a clock and time synchronization network, comprising a controller including an information acquisition module and a synchronization module, wherein
the information acquisition module is configured to acquire topology connections of a clock/time synchronization network and clock/time synchronization failure notification messages transmitted by various stages of network elements, and transmit the synchronization failure clock/time synchronization network and clock/time synchronization failure notification messages transmitted by various stages of network elements, and transmit the synchronization failure messages to the synchronization module; and
the synchronization module is configured to detect a link impacted by a failure after receiving the synchronization failure notification messages transmitted by the network elements, and notify a network element on the link which is connected to a standby clock/time source to switch to a state of being locked with the standby clock/time source and notify a network element on the link which is not connected to the standby clock/time source to switch to a clock/time holding state.

Preferably, the synchronization module is configured to after learning that a network element which is connected to the standby clock/time source selects the standby clock/time source as a clock/time source of itself, notify a network element in a holding state that is adjacent to the network element which selects the standby clock/time source to perform clock/time locking with the network element which selects the standby clock/time source; and after learning that the network element in the holding state selects an adjacent clock/time source as a clock/time source of itself, if it is judged that the network element in the holding state is not a network element which transmits a synchronization failure notification message, continue to notify a network element in a holding state which is adjacent to the network element to implement clock/time locking with the network element.

Preferably, the synchronization module is further configured to after notifying the network element on the link which is connected to a standby clock/time source to switch to the state of being locked with the standby clock/time source, and notifying the network element on the link which is not connected to the standby clock/time source to switch to the clock/time holding state, notify a network element in a holding state after a preset time interval, which is adjacent to the network element which is connected to the standby clock/time source, to perform clock/time locking with the network element which is connected to the standby clock/time source; and after notifying the network element in the clock holding state to perform the clock/time locking with its adjacent network element, if it is judged that the network element in the holding state is not a network element which transmits a failure notification message, continue to notify a network element in a holding state after the preset time interval, which is adjacent to the network element, to perform clock/time locking.

Preferably, the system further comprises network elements on the link impacted by the failure, wherein the network elements comprise the network elements which is connected to the standby clock/time source and the network element which is not connected to the standby clock/time source, wherein
the network element which is connected to the standby clock/time source is configured to after receiving a notification of switching to be locked with the standby clock/time source which is transmitted by the controller, acquire a quality level of the standby clock/time source, and if the quality level of the standby clock/time source is the same as a clock/time quality level of itself, not perform a locking flow, and if the quality level of the standby clock/time source is greater than the clock/time quality level of itself, perform locking with the standby clock/time source; and
the network element which is not connected to the standby clock/time source is configured to after receiving a notification of switching to be locked with a clock/time source of its adjacent network element which is transmitted by the controller, acquire a quality level of the clock/time source of the adjacent network element, and if a quality level of a clock/time source of a network element which selects clock/time is the same as a clock/time quality level of itself, not performing a locking flow; and if the quality level of the clock/time source of the adjacent clock/time network element is greater than the clock/time quality level of itself, perform clock/time locking with the adjacent clock/time network element.

The above technical solution ensures that when a synchronization failure occurs in the clock/time synchronization network, the controller can directly notify a network element which is connected to a standby clock/time source to switch to a state of being locked with the standby clock/time source, which compared with transferring a message network element by network element until a network element which can be locked with the standby clock/time source is found in the related technology, can more quickly acquire the standby clock/time source; and when a failure occurs in the clock/time synchronization network, the controller directly notifies the network element which is not connected to the standby clock to switch to a clock/time holding state, so that the problem of transfer of the clock/time error in the related technology can be constrained once it is found, which avoids diffusion of the clock/time error among the network nodes.

### Brief Description of Drawings

Fig. 1 is a topological diagram of a clock and time synchronization network;
Fig. 2 is a flowchart of processing a failure for a clock and time synchronization network according to an embodiment;
Fig. 3 is a diagram of adding a controller in a clock and time synchronization network according to an embodiment; and
Fig. 4 is a constitutional modular diagram of a system for processing a failure for a clock and time synchronization network according to an embodiment.

### Preferred Embodiments of the Present Invention

Embodiments of the present invention will be described in detail below in conjunction with accompanying drawings. It should be illustrated that the embodiments in the present application and features in the embodiments can be combined with each other without conflict.

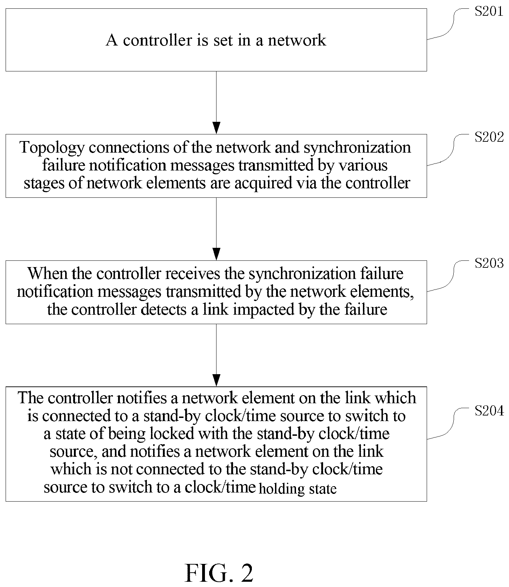

Fig. 2 is a flowchart of processing a failure for a clock and time synchronization network according to an embodiment.

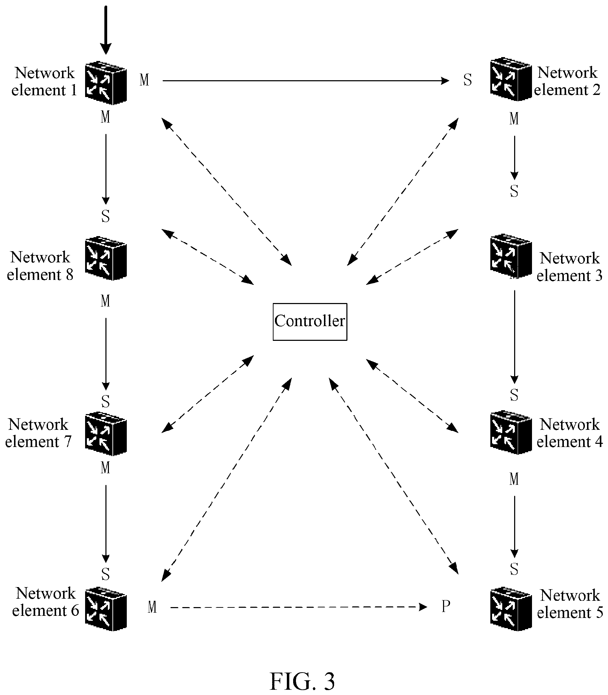

In S201, a controller is set in the synchronization network, as shown in Fig. 3;
in S202, topology connections of the clock/time synchronization network and clock/time synchronization failure notification messages transmitted by various stages of network elements are acquired via the controller;
in S203, when the controller receives the clock/time failure notification messages transmitted by the network elements, the controller detects a link impacted by the failure; and

In S204, the controller notifies a network element on the link which is connected to a standby clock/time source to switch to a state of being locked with the standby clock/time source, and notifies the network element on the link which is not connected to the standby clock/time source to switch to a clock/time holding state.

In the above embodiment, the controller in the clock/time synchronization network which can communicate with various stages of network elements and can acquire topology connections of the network is achieved. When a synchronization failure occurs in the network, the controller can directly notify a network element which is connected to a standby clock/time source to switch to a state of being locked with the standby clock/time source, which compared with transferring a notification message network element by network element until a network element which can be locked with the standby clock/time source is found in the related technology, can more quickly acquire the standby clock/time source. Further, in the above embodiment, when a synchronization failure occurs in the network, the controller directly notifies the network element which is not connected to the standby clock to switch to a clock/time holding state, so that the problem of transfer of the clock/time error in the related technology can be constrained once it is found, which avoids diffusion of the clock/time error among the network nodes.

As the method for processing a synchronization failure recited above is also suitable for both the time synchronization network and the clock synchronization network, "clock/time" represents clock in the clock synchronization network and represents time in the time synchronization network.

In order to enable a node on the link impacted by the failure to recover to a clock synchronization state, the above embodiment further comprises the following steps.
after learning that a network element which is connected to the standby clock/time source selects the standby clock/time source as its clock/time source, the controller notifies a network element in a holding state that is adjacent to the network element which selects the standby clock/time source to performing clock/time locking with the network element which selects the standby clock/time source; and
after learning that the network element in the holding state selects an adjacent clock/time source thereof as its clock/time source, if it is judged that the network element in the holding state is not a network element which transmits a synchronization failure notification message, the controller continues to notify the network element in the holding state which is adjacent to the network element to perform clock/time locking with the network element.

Or,
after the network element which is connected to the standby clock/time source selects the standby clock/time source as its own clock/time source, the network element notifies a network element in a clock/time holding state which is adjacent to the network element to perform clock/time locking with the network element; and after the network element in a holding state selects a clock/time source and in a case of determining that it does not transmit a failure notification message to the controller, the network element continues to notify the network element in a clock/time holding state which is adjacent to the network element to performing clock/time locking with the network element.

Or,
after notifying the network element on the link which is connected to a standby clock/time source to switch to a state of being locked with the standby clock/time source, and notifying the network element on the link which is not connected to the standby clock/time source to switch to a clock/time holding state, the controller notifies a network element in a holding state after a preset time interval, which is adjacent to the network element which is connected to the standby clock/time source, to performing clock/time locking with the network element which is connected to the standby clock/time source; and
after notifying the network element in the clock holding state to implement clock/time locking with its adjacent network element, if it is judged that the network element in the holding state is not a network element which transmits a failure notification message, the controller continues to notify the network element in the holding state after the preset time interval, which is adjacent to the network element, to implement clock/time locking.

When the network element in the network receives a notification of implementing clock/time locking with its adjacent network element from the controller, in order to avoid the network element and a network element having the same clock/time quality level from being locked with each other, in the above embodiment, after receiving a notification of switching to a state of being locked with the standby clock/time source which is transmitted by the controller, the network element which is connected to the standby clock/time source acquires a quality level of the standby clock/time source, and if the quality level of the standby clock/time source is the same as a clock/time quality level of itself, a locking flow is not performed, and if the quality level of the standby clock/time source is greater than the clock/time quality level of itself, locking with the standby clock/time source is performed; and after receiving a notification of switching to a state of being locked with a clock/time source of its adjacent network element which is transmitted by the controller, the network element in the holding state acquires a quality level of the clock/time source of the adjacent network element, and if the quality level of the clock/time source of the network element which selects clock/time is the same as a clock/time quality level of itself, a locking flow is not performed; and if the quality level of the clock/time source of the adjacent clock/time network element is greater than the clock/time quality level of itself, clock/time locking with the adjacent clock/time network element is performed.

The above embodiment will be further described below by three specific application examples.

Application example one: a synchronization failure occurs in a clock network

As shown in Fig. 3, when a fiber break failure occurs between network element 1 and network element 2, the network element 2 finds that a reference clock is lost, and immediately transmits a clock synchronization failure notification to a controller while entering a clock holding state.

After receiving the synchronization failure notification transmitted by the network element 2, the controller judges that a link impacted by the failure is network element 2 - network element 3 - network element 4 - network element 5, wherein the network element 5 has a standby clock source which is connected therewith, i.e., a clock of network element 6, and the network elements 3 and 4 do not have a standby clock source which is connected therewith;
the controller notifies the network element 5 to lock with the clock of the network element 6, and notifies the network elements 2, 3 and 4 to switch to a clock holding state;
after receiving a message of selecting the clock of the network element 6 which is transmitted by the network element 5, the controller notifies the network element 4 to lock with the clock of the network element 5;
after receiving a message of selecting the clock of the network element 5 which is transmitted by the network element 4, the controller notifies the network element 3 to lock with the clock of the network element 4; and
after receiving a message of selecting the clock of the network element 4 which is transmitted by the network element 3, the controller notifies the network element 2 to lock with the clock of the network element 3.

Application example two: a synchronization failure occurs in a clock network

As shown in Fig. 3, when a fiber break failure occurs between network element 1 and network element 2, the network element 2 finds that a reference clock is lost, and immediately transmits a clock synchronization failure notification to a controller while entering a clock holding state.

After receiving the synchronization failure notification transmitted by the network element 2, the controller judges that a link impacted by the failure is network element 2 - network element 3 - network element 4 - network element 5, wherein the network element 5 has a standby clock source which is connected therewith, i.e., a clock of network element 6, and the network elements 3 and 4 do not have a standby clock source which is connected therewith;
the controller notifies the network element 5 to lock with the clock of the network element 6, and notifies the network elements 2, 3 and 4 to switch to a clock holding state;
after selecting the clock of the network element 6, the network element 5 notifies the network element 4 to lock with its own clock;
after selecting the clock of the network element 5, the network element 4 notifies the network element 3 to lock with its own clock; and
after selecting the clock of the network element 4, the network element 3 notifies the network element 2 to lock with its own clock.

Application example three: a synchronization failure occurs in a clock network

As shown in Fig. 3, when a fiber break failure occurs between network element 1 and network element 2, the network element 2 finds that a reference clock is lost, and immediately transmits a clock synchronization failure notification to a controller while entering a clock holding state.

After receiving the synchronization failure notification transmitted by the network element 2, the controller judges that a link impacted by the failure is network element 2 - network element 3 - network element 4 - network element 5, wherein the network element 5 has a standby clock source which is connected therewith, i.e., a clock of network element 6, and the network elements 3 and 4 do not have the standby clock source which is connected therewith;
the controller notifies the network element 5 to lock with the clock of the network element 6, and notifies the network elements 2, 3 and 4 to switch to a clock holding state;
the controller notifies the network element 4 to lock with the clock of the network element 5 after a preset time t;
the controller notifies the network element 3 to lock with the clock of the network element 4 after the preset time t; and
the controller notifies the network element 2 to lock with the clock of the network element 3 after the preset time t.

The preset time t is required to be no less than a minimum time which is generally required by the network element to complete time locking.

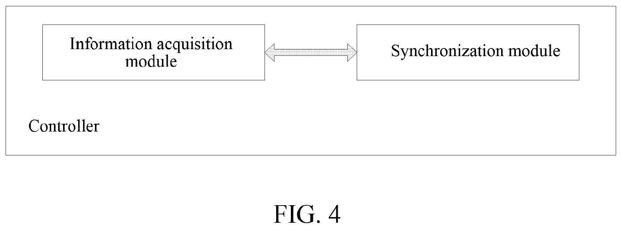

Fig. 4 is a constitutional modular diagram of a system for processing a synchronization failure for a clock and time synchronization network according to an embodiment.

The system comprises a controller including an information acquisition module and a synchronization module, wherein
the information acquisition module is configured to acquire topology connections of the clock/time synchronization network and clock/time synchronization failure notification messages transmitted by various stages of network elements, and transmit the synchronization failure messages to the synchronization module; and
the synchronization module is configured to detect a link impacted by the failure after receiving the synchronization failure notification messages transmitted by the network elements, and notify a network element on the link which is connected to a standby clock/time source to switch to a state of being locked with the standby clock/time source and notify the network element on the link which is not connected to the standby clock/time source to switch to a clock/time holding state.

In the above system, when a synchronization failure occurs in the clock/time synchronization network, the controller can directly notify a network element which is connected to a standby clock/time source to switch to a state of being locked with the standby clock/time source, which compared with transferring a message network element by network element until a network element which can be locked with the standby clock/time source is found in the related technology, can more quickly acquire the standby clock/time source. Further, when a synchronization failure occurs in the clock/time synchronization network, the controller directly notifies the network element which is not connected to the standby clock to switch to a clock/time holding state, so that the problem of transfer of the clock/time error in the related technology can be constrained once it is found, which avoids diffusion of the clock/time error among the network nodes.

In order to enable a node on the link impacted by the failure to recover to a clock synchronization state, the synchronization module of the above system is further used to after learning that a network element which is connected to the standby clock/time source selects the standby clock/time source as its clock/time source, notify a network element in a holding state that is adjacent to the network element which selects the standby clock/time source to perform clock/time locking with the network element which selects the standby clock/time source; and after learning that the network element in the holding state selects an adjacent clock/time source as its clock/time source, if it is judged that the network element in the holding state is not a network element which transmits a synchronization failure notification message, continue to notify the network element in the holding state which is adjacent to the network element to perform clock/time locking with the network element;
or
the synchronization module of the above system is further configured to after notifying network element on the link which is connected to a standby clock/time source to switch to a state of being locked with the standby clock/time source, and notifying the network element on the link which is not connected to the standby clock/time source to switch to a clock/time holding state, notify a network element in a holding state after a preset time interval, which is adjacent to the network element which is connected to the standby clock/time source, to perform clock/time locking with the network element which is connected to the standby clock/time source; and after notifying the network element in the clock holding state to perform clock/time locking with its adjacent network element, if it is judged that the network element in the holding state is not a network element which transmits a failure notification message, continue to notify the network element in the holding state after the preset time interval, which is adjacent to the network element, to perform clock/time locking in the holding state.

In order to enable a node on the link impacted by the failure to recover to a clock synchronization state, the above system may further comprise network elements on the link impacted by the failure, wherein the network elements comprise a network element which is connected to the standby clock/time source and a network element which is not connected to the standby clock/time source, wherein
the network element which is connected to the standby clock/time source is configured to after receiving a notification from the controller, complete clock/time locking with the standby clock/time source, and after selecting the standby clock/time source as its own clock/time source, notify its adjacent network element in a clock holding state on the link which is not connected to the standby clock/time source to perform clock/time locking therewith; and
the network elements which is not connected to the standby clock/time source is configured to after receiving the notification from the controller, enter a clock/time holding state; and after selecting a clock/time source, if it is judged that it does not transmit a synchronization failure notification message to the controller, continue to notify its adjacent network element in a clock holding state which is not connected to the standby clock/time source to perform clock/time locking therewith.

When the network element in the network receives a notification of performing clock/time locking with its adjacent network element from the controller, in order to avoid the network element and a network element having the same clock/time quality level from being locked with each other, the network element which is connected to the standby clock/time source is further configured to after receiving a notification of switching to a state of being locked with the standby clock/time source which is transmitted by the controller, acquire a quality level of the standby clock/time source, and if the quality level of the standby clock/time source is the same as a clock/time quality level of itself, not performing a locking flow, and if the quality level of the standby clock/time source is greater than the clock/time quality level of itself, performing locking with the standby clock/time source; and the network element which is not connected to the standby clock/time source is further configured to after receiving a notification of switching to a state of being locked with a clock/time source of its adjacent network element which is transmitted by the controller, acquire a quality level of the clock/time source of the adjacent network element, and if the quality level of the clock/time source of the network element which selects clock/time is the same as a clock/time quality level of itself, not perform a locking flow; and if the quality level of the clock/time source of the adjacent clock/time network element is greater than the clock/time quality level of itself, perform clock/time locking with the adjacent clock/time network element.

Those skilled in the related art should understand that all or a part of steps in the aforementioned method can be completed by programs instructing the related hardware, and the programs can be stored in a computer readable storage medium, such as a read-only memory, a disk, or a disc etc. Alternatively, all or a part of steps of the aforementioned embodiments can also be implemented with one or more integrated circuits. Correspondingly, each module/unit in the above embodiments can be implemented in the form of hardware, or can be implemented in the form of software functional modules. The present invention is not limited to any specific form of combination of hardware and software.

It should be illustrated that the present invention can also have a plurality of other embodiments, and those skilled in the related art can make various corresponding changes and variations according to the present invention, without departing from the scope of the appended claims, while all these corresponding changes and variations should belong to the protection scope of the appended claims of the present invention.

### Industrial applicability

The above technical solution ensures that when a synchronization failure occurs in the clock/time synchronization network, the controller can directly notify a network element which is connected to a standby clock/time source to switch to a state of being locked with the standby clock/time source, which compared with transferring a message network element by network element until a network element which can be locked with the standby clock/time source is found in the related technology, can more quickly acquire the standby clock/time source; and when a failure occurs in the clock/time synchronization network, the controller directly notifies the network elements which are not connected to the standby clock to switch to a clock/time holding state, so that the problem of transfer of the clock/time error in the related technology can be constrained once it is found, which avoids diffusion of the clock/time error among the network nodes.

## Claims

1. A method for processing a synchronization failure for a clock and time synchronization network, comprising:
providing a controller in a clock/time synchronization network (S201), and acquiring, by the controller, topology connections of the network and clock/time synchronization failure notification messages transmitted by network elements of various levels when the network elements themselves detect a failure (S202);
when the controller receives the clock/time synchronization failure notification messages transmitted by the network elements, the controller detecting a link impacted by the failure in the topology connections of the network (S203); and
the controller notifying a network element which is connected to a standby clock/time source on the link to switch to a clock/time locking state of being synchronized with the standby clock/time source, and notifying a network element which is not connected to the standby clock/time source on the link to switch to a clock/time holding state (S204),
wherein acquiring, through the controller, topology connections of the network comprises:
the network elements are queried by the controller for their associated links, or the network elements actively reports their associated links to the controller,
the standby clock/time source is a clock/time source other than a clock/time source that is synchronized with the network element currently.

2. The method according to claim 1, further comprising:
after learning that the network element which is connected to the standby clock/time source selects the standby clock/time source as a clock/time source of itself, the controller notifying a network element in a holding state, which is adjacent to the network element which selects the standby clock/time source, to perform clock/time locking with the network element which selects the standby clock/time source; and
after learning that the network element in the holding state selects an adjacent clock/time source of the network element in the holding state as a clock/time source of itself, if it is judged that the network element in the holding state is not a network element which transmits a synchronization failure notification message, the controller continuing to notify a network element in a holding state, which is adjacent to the network element, to perform clock/time locking with the network element.

3. The method according to claim 1, further comprising:
after notifying the network element which is connected to the standby clock/time source on the link to switch to the clock/time locking state of being synchronized with the standby clock/time source, and notifying the network element which is not connected to the standby clock/time source on the link to switch to the clock/time holding state, the controller notifying a network element in a holding state after a preset time interval, which is adjacent to the network element which is connected to the standby clock/time source, to perform clock/time locking with the network element which is connected to the standby clock/time source; and
after notifying the network element in the clock holding state to perform the clock/time locking with the adjacent network element of the network element in the clock holding state, if it is judged that the network element in the holding state is not a network element which transmits a failure notification message, the controller continuing to notify a network element in a holding state after the preset time interval, which is adjacent to the network element, to perform the clock/time locking.

4. The method according to any one of claims 2 to 3, further comprising:
after receiving a notification of switching to the clock/time locking state of being synchronized with the standby clock/time source which is transmitted by the controller, the network element which is connected to the standby clock/time source acquiring a quality level of the standby clock/time source, and if the quality level of the standby clock/time source is the same as a clock/time quality level of itself, not performing a locking flow, and if the quality level of the standby clock/time source is greater than the clock/time quality level of itself, implementing locking with the standby clock/time source; and
after receiving a notification of switching to be locked with a clock/time source of the adjacent network element of the network element in the holding state which is transmitted by the controller, the network element in the holding state acquiring a quality level of the clock/time source of the adjacent network element, and if a quality level of a clock/time source of a network element which selects clock/time is the same as a clock/time quality level of itself, not performing a locking flow; and if the quality level of the clock/time source of an adjacent clock/time network element is greater than the clock/time quality level of itself, implementing clock/time locking with the adjacent clock/time network element.

5. A system for processing a synchronization failure for a clock and time synchronization network, comprising a controller including an information acquisition module and a synchronization module, wherein
the information acquisition module is configured to acquire topology connections of a clock/time synchronization network and clock/time synchronization failure notification messages transmitted by network elements of various levels when the network elements themselves detect a failure, and transmit the synchronization failure messages to the synchronization module; and
the synchronization module is configured to detect a link impacted by the failure in the topology connections of the network after receiving the synchronization failure notification messages transmitted by the network elements, and notify a network element which is connected to a standby clock/time source on the link to switch to a clock/time locking state of being synchronized with the standby clock/time source and notify a network element which is not connected to the standby clock/time source on the link to switch to a clock/time holding state,
wherein acquiring topology connections of the clock/time synchronization network comprises:
the network elements are queried by the information acquisition module for their associated links, or the network elements actively reports their associated links to the information acquisition module,
the standby clock/time source is a clock/time source other than a clock/time source that is synchronized with the network element currently.

6. The system according to claim 5, wherein
the synchronization module is further configured to, after learning that the network element which is connected to the standby clock/time source selects the standby clock/time source as a clock/time source of itself, notify a network element in a holding state, which is adjacent to the network element which selects the standby clock/time source, to perform clock/time locking with the network element which selects the standby clock/time source; and after learning that the network element in the holding state selects an adjacent clock/time source of the network element in the holding state as a clock/time source of itself, if it is judged that the network element in the holding state is not a network element which transmits a synchronization failure notification message, continue to notify a network element in a holding state which is adjacent to the network element to implement clock/time locking with the network element.

7. The system according to claim 5, wherein
the synchronization module is further configured to, after notifying the network element which is connected to the standby clock/time source on the link to switch to the clock/time locking state of being synchronized with the standby clock/time source, and notifying the network element which is not connected to the standby clock/time source on the link to switch to the clock/time holding state, notify a network element in a holding state after a preset time interval, which is adjacent to the network element which is connected to the standby clock/time source, to perform clock/time locking with the network element which is connected to the standby clock/time source; and after notifying the network element in the clock holding state to perform the clock/time locking with the adjacent network element of the network element in the clock holding state, if it is judged that the network element in the holding state is not a network element which transmits a failure notification message, continue to notify a network element in a holding state after the preset time interval, which is adjacent to the network element, to perform clock/time locking.

8. The system according to any one of claims 6 to 7, further comprising network elements impacted by the failure on the link, wherein the network elements comprise the network element which is connected to the standby clock/time source and the network element which is not connected to the standby clock/time source, wherein
the network element which is connected to the standby clock/time source is configured to, after receiving a notification of switching to the clock/time locking state of being synchronized with the standby clock/time source which is transmitted by the controller, acquire a quality level of the standby clock/time source, and if the quality level of the standby clock/time source is the same as a clock/time quality level of itself, not perform a locking flow, and if the quality level of the standby clock/time source is greater than the clock/time quality level of itself, perform clock/time locking synchronized with the standby clock/time source; and
the network element which is not connected to the standby clock/time source is configured to, after receiving a notification, which is transmitted by the controller, of switching to be locked with a clock/time source of the adjacent network element of the network element which is not connected to the standby clock/time source, acquire a quality level of the clock/time source of the adjacent network element, and if a quality level of a clock/time source of a network element which selects clock/time is the same as a clock/time quality level of itself, not perform a locking flow; and if the quality level of the clock/time source of an adjacent clock/time network element is greater than the clock/time quality level of itself, perform clock/time locking with the adjacent clock/time network element.

## Patentansprüche

1. Verfahren zum Verarbeiten einer Synchronisationsstörung für ein Takt- und Zeitsynchronisierungsnetzwerk, Folgendes umfassend:
Bereitstellen einer Steuerung in einem Takt-/Zeitsynchronisierungsnetzwerk (S201) und Erfassen, durch die Steuerung, von Topologieverbindungen des Netzwerks und Takt-/Zeit-Synchronisierungsstörungsbenachrichtigungsmeldungen, die durch Netzwerkelemente verschiedener Stufen übermittelt werden, wenn die Netzwerkelemente selbst eine Störung erkennen (S202);
wenn die Steuerung die Takt-/Zeit-Synchronisierungsstörungsbenachrichtigungsmeldungen empfängt, die durch die Netzwerkelemente übertragen werden, Erkennen einer durch die Störung betroffenen Verknüpfung in den Topologieverbindungen des Netzwerks (S203) durch die Steuerung; und
Benachrichtigen eines Netzwerkelements durch die Steuerung, das mit einer Standby-Takt/Zeit-Quelle auf der Verknüpfung verbunden ist, in einen Blockierzustand, der mit der Standby-Takt/Zeit-Quelle synchronisiert ist, umzuschalten, und Benachrichtigen eines Netzwerkelements durch die Steuerung, das nicht mit einer Standby-Takt/Zeit-Quelle auf der Verknüpfung verbunden ist, in einen Takt/Zeit-Haltezustand (S204) umzuschalten,
wobei das Erfassen der Topologieverbindungen des Netzwerks durch die Steuerung Folgendes umfasst:
die Netzwerkelemente werden durch die Steuerung nach ihren assoziierten Verknüpfungen abgefragt, oder die Netzwerkelemente berichten aktiv ihre assoziierten Verknüpfungen an die Steuerung,
die Standby-Takt/Zeit-Quelle ist eine andere Takt/Zeit-Quelle als eine Takt/Zeit-Quelle, die aktuell mit dem Netzwerkelement synchronisiert ist.

2. Verfahren nach Anspruch 1, ferner Folgendes umfassend:
nach dem Lernen, dass das Netzwerkelement, das mit der Standby-Takt/Zeit-Quelle verbunden ist, die Standby-Takt/Zeit-Quelle als Takt/Zeit-Quelle selbst auswählt, Benachrichtigen durch die Steuerung eines Netzwerkelements in einem Haltezustand, das an das Netzwerkelement angrenzt, das die Takt/Zeit-Quelle auswählt, eine Takt/Zeit-Blockierung mit dem Netzwerkelement durchzuführen, das die Takt/Zeit-Quelle auswählt; und
nach dem Lernen, dass das Netzwerkelement in dem Haltezustand eine angrenzende Takt/Zeit-Quelle des Netzwerkelements in dem Haltezustand als Takt/Zeit-Quelle selbst auswählt, falls beurteilt ist, dass das Netzwerkelement in dem Haltezustand kein Netzwerkelement ist, das eine Synchronisierungsstörungsbenachrichtigungsmeldung übermittelt, Fortführen der Steuerung, ein Netzwerkelement in einem Haltezustand zu benachrichtigen, das an das Netzwerkelement angrenzt, um die Takt/Zeit-Blockierung mit dem Netzwerkelement durchzuführen.

3. Verfahren nach Anspruch 1, ferner Folgendes umfassend:
nach dem Benachrichtigen des Netzwerkelements, das mit der Standby-Takt/Zeit-Quelle auf der Verknüpfung verbunden ist, in den Takt/Zeit-Blockierzustand umzuschalten, der mit der Standby-Takt/Zeit-Quelle synchronisiert ist, und dem Benachrichtigen des Netzwerkelements, das nicht mit der Standby-Takt/Zeit-Quelle auf der Verknüpfung verbunden ist, in den Takt/Zeit-Haltezustand umzuschalten, Benachrichtigen durch die Steuerung eines Netzwerkelements in einem Haltezustand nach einem vorbestimmten Zeitintervall, das an das Netzwerkelement angrenzt, das mit der Standby-Takt/Zeit-Quelle verbunden ist, um ein Takt/Zeit-Blockieren mit dem Netzwerkelement durchzuführen, das mit der Standby-Takt/Zeit-Quelle verbunden ist; und
nach dem Benachrichtigen des Netzwerkelements in dem Zeit-Haltezustand, ein Takt/Zeit-Blockieren mit dem angrenzenden Netzwerkelement des Netzwerkelements in dem Zeit-Haltezustand durchzuführen, falls beurteilt ist, dass das Netzwerkelement in dem Haltezustand kein Netzwerkelement ist, das eine Fehlerbenachrichtigungmeldung übermittelt, Fortführen der Steuerung, ein Netzwerkelement in einem Haltezustand nach dem vorbestimmten Zeitintervall zu benachrichtigen, das an das Netzwerkelement angrenzt, um die Takt/Zeit-Blockierung durchzuführen.

4. Verfahren nach einem der Ansprüche 2 bis 3, das ferner Folgendes umfasst:
nach dem Empfangen einer Benachrichtigung zum Umschalten in den Takt/Zeit-Blockierzustand, der mit der durch die Steuerung übermittelten Standby-Takt/Zeit-Quelle synchronisiert ist, Erfassen einer Qualitätsstufe der Standby-Takt/Zeit-Quelle durch das Netzwerkelement, das mit der Standby-Takt/Zeit-Quelle verbunden ist, und falls die Qualitätsstufe der Standby-Takt/Zeit-Quelle die gleiche ist wie die eigene Takt/Zeit-Qualitätsstufe, kein Durchführen eines Blockierflusses, und falls die Qualitätsstufe der Standby-Takt/Zeit-Quelle größer als die eigene Takt/Zeit-Qualitätsstufe ist, Implementieren von Blockieren mit der Standby-Takt/Zeit-Quelle; und
nach dem Empfangen einer Benachrichtigung zum Umschalten, um mit einer Takt-Zeit-Quelle des angrenzenden Netzwerkelements des Netzwerkelements in dem Haltezustand, das durch die Steuerung übermittelt wird, blockiert zu sein, Erfassen durch das Netzwerkelement in dem Haltezustand einer Qualitätsstufe der Takt/Zeit-Quelle des angrenzenden Netzwerkelements, und falls die Qualitätsstufe einer Takt/Zeit-Quelle des Netzwerkelements, das den Takt/die Zeit auswählt, die gleiche ist wie die eigene Takt/Zeit-Qualitätsstufe, kein Durchführen eines Blockierflusses; und falls die Qualitätsstufe der Takt/Zeit-Quelle eines angrenzenden Takt/Zeit-Netzwerkelements größer als die eigene Takt/Zeit-Qualitätsstufe ist, Implementieren des Takt/Zeit-Blockierens mit dem angrenzenden Takt/Zeit-Netzwerkelement.

5. System zum Verarbeiten einer Synchronisationsstörung für ein Takt- und Zeitsynchronisierungsnetzwerk, eine Steuerung umfassend, die ein Informationserfassungsmodul und ein Synchronisationsmodul beinhaltet, wobei
das Informationserfassungsmodul dazu konfiguriert ist, Topologieverbindungen eines Takt/Zeit-Synchronisationsnetzwerks und Takt/Zeit-Synchronisierungsstörungsbenachrichtigungsmeldungen, die durch Netzwerkelemente verschiedener Stufen übermittelt werden, wenn die Netzwerkelemente selbst eine Störung erkennen, zu erfassen und die Synchronisierungsstörungsmeldungen an das Synchronisationsmodul zu übermitteln; und
das Synchronisationsmodul dazu konfiguriert ist, nach dem Empfangen der Synchronisierungsstörungsbenachrichtigungsmeldungen, die durch die Netzwerkelemente übermittelt werden, eine Verknüpfung zu erkennen, die durch die Störung in den Topologieverknüpfungen betroffen ist und ein Netzwerkelement zu benachrichtigen, das mit einer Standby-Takt/Zeit-Quelle auf der Verknüpfung verbunden ist, um in einen Takt/Zeit-Zustand umzuschalten, der mit der Standby-Takt/Zeit-Quelle synchronisiert ist, und ein Netzwerkelement zu benachrichtigen, das nicht mit einer Standby-Takt/Zeit-Quelle auf der Verknüpfung verbunden ist, in einen Takt/Zeit-Haltezustand umzuschalten,
wobei das Erfassen der Topologieverbindungen des Takt/Zeit-Synchronisierungsnetzwerks Folgendes umfasst:
die Netzwerkelemente werden durch das Informationserfassungsmodul nach ihren assoziierten Verknüpfungen abgefragt, oder die Netzwerkelemente berichten aktiv ihre assoziierten Verknüpfungen an das Informationserfassungsmodul,
die Standby-Takt/Zeit-Quelle ist eine andere Takt/Zeit-Quelle als eine Takt/Zeit-Quelle, die aktuell mit dem Netzwerkelement synchronisiert ist.

6. System nach Anspruch 5 wobei
das Synchronisationsmodul ferner dazu konfiguriert ist, nach dem Lernen, dass das Netzwerkelement, das mit der Standby-Takt/Zeit-Quelle verbunden ist, die Standby-Takt/Zeit-Quelle als Takt/Zeit-Quelle selbst auswählt, ein Netzwerkelement in einem Haltezustand zu benachrichtigen, das an das Netzwerkelement angrenzt, das die Takt/Zeit-Quelle auswählt, um eine Takt/Zeit-Blockierung mit dem Netzwerkelement durchzuführen, das die Takt/Zeit-Quelle auswählt;
nach dem Lernen, dass das Netzwerkelement in dem Haltezustand eine angrenzende Takt/Zeit-Quelle des Netzwerkelements in dem Haltezustand als Takt/Zeit-Quelle selbst auswählt, falls beurteilt ist, dass das Netzwerkelement in dem Haltezustand kein Netzwerkelement ist, das eine Synchronisierungsstörungsbenachrichtigungsmeldung übermittelt, das Benachrichtigen eines Netzwerkelements in einem Haltezustand, das an das Netzwerkelement angrenzt, fortgeführt wird, um die Takt/Zeit-Blockierung mit dem Netzwerkelement zu implementieren.

7. System nach Anspruch 5 wobei
das Synchronisationsmodul ferner dazu konfiguriert ist, nach dem Benachrichtigen des Netzwerkelements, das mit der Standby-Takt/Zeit-Quelle auf der Verknüpfung verbunden ist, in den Takt/Zeit-Blockierzustand umzuschalten, der mit der Standby-Takt/Zeit-Quelle synchronisiert ist, und dem Benachrichtigen des Netzwerkelements, das nicht mit der Standby-Takt/Zeit-Quelle auf der Verknüpfung verbunden ist, in den Takt/Zeit-Haltezustand umzuschalten, ein Netzwerkelement in einem Haltezustand nach einem vorbestimmten Zeitintervall zu benachrichtigen, das an das Netzwerkelement angrenzt, das mit der Standby-Takt/Zeit-Quelle verbunden ist, um ein Takt/Zeit-Blockieren mit dem Netzwerkelement durchzuführen, das mit der Standby-Takt/Zeit-Quelle verbunden ist; und nach dem Benachrichtigen des Netzwerkelements in dem Zeit-Haltezustand, ein Takt/Zeit-Blockieren mit dem angrenzenden Netzwerkelement des Netzwerkelements in dem Zeit-Haltezustand durchzuführen, falls beurteilt ist, dass das Netzwerkelement in dem Haltezustand kein Netzwerkelement ist, das eine Fehlerbenachrichtigungmeldung übermittelt, Fortführen, ein Netzwerkelement in einem Haltezustand nach dem vorbestimmten Zeitintervall zu benachrichtigen, das an das Netzwerkelement angrenzt, um die Takt/Zeit-Blockierung durchzuführen.

8. System nach einem der Ansprüche 6 bis 7, ferner Netzwerkelemente umfassend, die durch die Störung auf der Verknüpfung betroffen sind, wobei die Netzwerkelemente das Netzwerkelement, das mit der Standby-Takt/Zeit-Quelle verbunden ist und das Netzwerkelement umfassen, das nicht mit der Standby-Takt/Zeit-Quelle verbunden ist, wobei
das Netzwerkelement, das mit der Standby-Takt/Zeit-Quelle verbunden ist, dazu konfiguriert ist, nach dem Empfangen einer Benachrichtigung zum Umschalten in den Takt/Zeit-Blockierzustand, der mit der durch die Steuerung übermittelten Standby-Takt/Zeit-Quelle synchronisiert ist, eine Qualitätsstufe der Standby-Takt/Zeit-Quelle durch das Netzwerkelement zu erfassen, das mit der Standby-Takt/Zeit-Quelle verbunden ist, und falls die Qualitätsstufe der Standby-Takt/Zeit-Quelle die gleiche ist wie die eigene Takt/Zeit-Qualitätsstufe, keinen Blockierfluss durchzuführen, und falls die Qualitätsstufe der Standby-Takt/Zeit-Quelle größer als die eigene Takt/Zeit-Qualitätsstufe ist, das Blockieren der mit der Standby-Takt/Zeit-Quelle synchronisierten Takt/Zeit durchzuführen;
und
das Netzwerkelement, das nicht mit der Standby-Takt/Zeit-Quelle verbunden ist, dazu konfiguriert ist, nach dem Empfangen einer durch die Steuerung übermittelten Benachrichtigung zum Umschalten, um mit einer Takt/Zeit-Quelle des angrenzenden Netzwerkelements des Netzwerkelements, das nicht mit der Standby-Takt/Zeit-Quelle verbunden ist, blockiert zu sein, eine Qualitätsstufe der Takt/Zeit-Quelle des angrenzenden Netzwerkelements zu erfassen, und falls die Qualitätsstufe einer Takt/Zeit-Quelle eines Netzwerkelements, das den Takt/die Zeit auswählt, gleich der eigenen Takt/Zeit-Qualitätsstufe ist, keinen Blockierfluss durchzuführen; und falls die Qualitätsstufe der Takt/Zeit-Quelle eines angrenzenden Takt/Zeit-Netzwerkelements größer als die eigene Takt/Zeit-Qualitätsstufe ist, das Takt/Zeit-Blockieren mit dem angrenzenden Takt/Zeit-Netzwerkelement durchzuführen.

## Revendications

1. Procédé de traitement d'échec de synchronisation pour un réseau de synchronisation d'horloge et de temps, comprenant :
la fourniture d'un contrôleur dans un réseau de synchronisation d'horloge/temps (S201), et l'acquisition, par l'intermédiaire du contrôleur, des connexions de topologie du réseau et de messages de notification d'échec de synchronisation d'horloge/temps transmis par des éléments de réseau de divers niveaux lorsque les éléments de réseaux eux-mêmes détectent un échec (S202) ;
lorsque le contrôleur reçoit les messages de notification d'échec de synchronisation d'horloge/temps transmis par les éléments de réseau, le contrôleur détectant une liaison affectée par l'échec dans les connexions de topologie du réseau (S203) ; et
le contrôleur notifiant à un élément de réseau qui est connecté à une source horloge/temps de secours sur la liaison de commuter vers un état de verrouillage d'horloge/temps consistant à être synchronisé avec la source horloge/temps de secours, et notifiant à un élément de réseau qui n'est pas connecté à la source horloge/temps de secours sur la liaison de commuter vers un état de maintien d'horloge/temps (S204),
ladite acquisition, par l'intermédiaire du contrôleur, des connexions de topologie du réseau comprenant :
les éléments de réseau sont interrogés par le contrôleur pour leurs liaisons associées, ou les éléments de réseau signalent activement leurs liaisons associées au contrôleur,
la source horloge/temps de secours est une source horloge/temps différente d'une source horloge/temps qui est couramment synchronisée avec l'élément de réseau.

2. Procédé selon la revendication 1, comprenant en outre :
après avoir appris que l'élément de réseau qui est connecté à la source horloge/temps de secours sélectionne la source horloge/temps de secours en tant que source horloge/temps de lui-même, le contrôleur notifiant à un élément de réseau dans un état de maintien, qui est adjacent à l'élément de réseau qui sélectionne la source horloge/temps de secours, de réaliser un verrouillage d'horloge/temps avec l'élément de réseau qui sélectionne la source horloge/temps de secours ; et
après avoir appris que l'élément de réseau dans l'état de maintien sélectionne une source horloge/temps adjacente de l'élément de réseau dans l'état de maintien en tant que source horloge/temps de lui-même, s'il est jugé que l'élément de réseau dans l'état de maintien n'est pas un élément de réseau qui transmet un message de notification d'échec de synchronisation, le contrôleur continuant de notifier à un élément de réseau dans un état de maintien, qui est adjacent à l'élément de réseau, de réaliser un verrouillage d'horloge/temps avec l'élément de réseau.

3. Procédé selon la revendication 1, comprenant en outre :
après avoir notifié à un élément de réseau qui est connecté à la source horloge/temps de secours sur la liaison de commuter vers l'état de verrouillage d'horloge/temps consistant à être synchronisé avec la source horloge/temps de secours, et notifié à l'élément de réseau qui n'est pas connecté à la source horloge/temps de secours sur la liaison de commuter vers l'état de maintien d'horloge/temps, le contrôleur notifiant à un élément de réseau dans un état de maintien après un intervalle de temps prédéfini, qui est adjacent à l'élément de réseau qui est connecté à la source horloge/temps de secours, de réaliser un verrouillage d'horloge/temps avec l'élément de réseau qui est connecté à la source horloge/temps de secours ; et
après avoir notifié à l'élément de réseau dans l'état de maintien d'horloge de réaliser le verrouillage d'horloge/temps avec l'élément de réseau adjacent de l'élément de réseau dans l'état de maintien d'horloge, s'il est jugé que l'élément de réseau dans l'état de maintien n'est pas un élément de réseau qui transmet un message de notification d'échec, le contrôleur continuant à notifier à un élément de réseau dans un état de maintien après l'intervalle de temps prédéfini, qui est adjacent à l'élément de réseau, de réaliser le verrouillage d'horloge/temps.

4. Procédé selon l'une quelconque des revendications 2 à 3, comprenant en outre :
après avoir reçu une notification de commutation vers l'état de verrouillage d'horloge/temps consistant à être synchronisé avec la source horloge/temps de secours qui est transmise par le contrôleur, l'élément de réseau qui est connecté à la source horloge/temps de secours acquérant le niveau de qualité de la source horloge/temps de secours, et si le niveau de qualité de la source horloge/temps de secours est le même que le niveau de qualité d'horloge/temps de lui-même, ne réalisant pas un flux de verrouillage, et si le niveau de qualité de la source horloge/temps de secours est supérieur au niveau de qualité d'horloge/temps de lui-même, mettant en oeuvre un verrouillage avec la source horloge/temps de secours ; et
après avoir reçu une notification de commutation pour être verrouillé avec une source horloge/temps de l'élément de réseau adjacent de l'élément de réseau dans l'état de maintien qui est transmise par le contrôleur, l'élément de réseau dans l'état de maintien acquérant le niveau de qualité de la source horloge/temps de l'élément de réseau adjacent, et si le niveau de qualité d'une source horloge/temps d'un élément de réseau qui sélectionne l'horloge/temps est le même que le niveau de qualité d'horloge/temps de lui-même, ne réalisant pas un flux de verrouillage ; et si le niveau de qualité de la source horloge/temps d'un élément de réseau d'horloge/temps adjacent est supérieur au niveau de qualité d'horloge/temps de lui-même, mettant en oeuvre un verrouillage d'horloge/temps avec l'élément de réseau d'horloge/temps adjacent.

5. Système de traitement d'échec de synchronisation pour un réseau de synchronisation d'horloge et de temps, comprenant un contrôleur comportant un module d'acquisition d'informations et un module de synchronisation, dans lequel
le module d'acquisition d'informations est configuré pour acquérir des connexions de topologie d'un réseau de synchronisation d'horloge/temps et de messages de notification d'échec de synchronisation d'horloge/temps transmis par des éléments de réseau de divers niveaux lorsque les éléments de réseau eux-mêmes détectent un échec, et transmettre les messages d'échec de synchronisation au module de synchronisation ; et
le module de synchronisation est configuré pour détecter une liaison affectée par l'échec dans les connexions de topologie du réseau après avoir reçu les messages de notification d'échec de synchronisation transmis par les éléments de réseau, et notifier à un élément de réseau qui est connecté à une source horloge/temps de secours sur la liaison de commuter vers un état de verrouillage d'horloge/temps consistant à être synchronisé avec la source horloge/temps de secours et notifier à un élément de réseau qui n'est pas connecté à la source horloge/temps de secours sur la liaison de commuter vers un état de maintien d'horloge/temps,
ladite acquisition des connexions de topologie du réseau de synchronisation d'horloge/temps comprenant :
les éléments de réseau sont interrogés par le module d'acquisition d'informations pour leurs liaisons associées, ou les éléments de réseau signalent activement leurs liaisons associées au module d'acquisition d'informations,
la source horloge/temps de secours est une source horloge/temps différente d'une source horloge/temps qui est couramment synchronisée avec l'élément de réseau.

6. Système selon la revendication 5, dans lequel
le module de synchronisation est en outre configuré pour, après avoir appris que l'élément de réseau qui est connecté à la source horloge/temps de secours sélectionne la source horloge/temps de secours en tant que source horloge/temps de lui-même, notifier à un élément de réseau dans un état de maintien, qui est adjacent à l'élément de réseau qui sélectionne la source horloge/temps de secours, de réaliser un verrouillage d'horloge/temps avec l'élément de réseau qui sélectionne la source horloge/temps de secours ; et après avoir appris que l'élément de réseau dans l'état de maintien sélectionne une source horloge/temps adjacente de l'élément de réseau dans l'état de maintien en tant que source horloge/temps de lui-même, s'il est jugé que l'élément de réseau dans l'état de maintien n'est pas un élément de réseau qui transmet un message de notification d'échec de synchronisation, continuer de notifier à un élément de réseau dans un état de maintien, qui est adjacent à l'élément de réseau, de mettre en oeuvre un verrouillage d'horloge/temps avec l'élément de réseau.

7. Système selon la revendication 5, dans lequel
le module de synchronisation est en outre configuré pour, après avoir notifié à l'élément de réseau qui est connecté à la source horloge/temps de secours sur la liaison de commuter vers l'état de verrouillage d'horloge/temps consistant à être synchronisé avec la source horloge/temps de secours, et notifié à l'élément de réseau qui n'est pas connecté à la source horloge/temps de secours sur la liaison de commuter vers l'état de maintien d'horloge/temps, notifier à un élément de réseau dans un état de maintien après un intervalle de temps prédéfini, qui est adjacent à l'élément de réseau qui est connecté à la source horloge/temps de secours, de réaliser un verrouillage d'horloge/temps avec l'élément de réseau qui est connecté à la source horloge/temps de secours ; et après avoir notifié à l'élément de réseau dans l'état de maintien d'horloge de réaliser le verrouillage d'horloge/temps avec l'élément de réseau adjacent de l'élément de réseau dans l'état de maintien d'horloge, s'il est jugé que l'élément de réseau dans l'état de maintien n'est pas un élément de réseau qui transmet un message de notification d'échec, continuer à notifier à un élément de réseau dans un état de maintien après l'intervalle de temps prédéfini, qui est adjacent à l'élément de réseau, de réaliser le verrouillage d'horloge/temps.

8. Système selon l'une quelconque des revendications 6 à 7, comprenant en outre des éléments de réseau affectés par l'échec sur la liaison, lesdits éléments de réseau comprenant l'élément de réseau qui est connecté à la source horloge/temps de secours et l'élément de réseau qui n'est pas connecté à la source horloge/temps de secours, dans lequel
l'élément de réseau qui est connecté à la source horloge/temps de secours est configuré pour, après avoir reçu une notification de commutation vers l'état de verrouillage d'horloge/temps consistant à être synchronisé avec la source horloge/temps de secours qui est transmise par le contrôleur, acquérir le niveau de qualité de la source horloge/temps de secours, et si le niveau de qualité de la source horloge/temps de secours est le même que le niveau de qualité d'horloge/temps de lui-même, ne pas réaliser un flux de verrouillage, et si le niveau de qualité de la source horloge/temps de secours est supérieur au niveau de qualité d'horloge/temps de lui-même, réaliser un verrouillage d'horloge/temps synchronisé avec la source horloge/temps de secours ; et
l'élément de réseau qui n'est pas connecté à la source horloge/temps de secours est configuré pour, après avoir reçu une notification, qui est transmise par le contrôleur, de commutation pour être verrouillé avec une source horloge/temps de l'élément de réseau adjacent de l'élément de réseau qui n'est pas connecté à la source horloge/temps de secours, acquérir un niveau de qualité de la source horloge/temps de l'élément de réseau adjacent, et si le niveau de qualité d'une source horloge/temps d'un élément de réseau qui sélectionne l'horloge/temps est le même que le niveau de qualité d'horloge/temps de lui-même, ne pas réaliser un flux de verrouillage ; et si le niveau de qualité de la source horloge/temps d'un élément de réseau d'horloge/temps adjacent est supérieur au niveau de qualité d'horloge/temps de lui-même, effectuer un verrouillage d'horloge/temps avec l'élément de réseau d'horloge/temps adjacent.
